# EUROPEAN PATENT SPECIFICATION

(11) **EP 4 458 479 B1**
(45) Date of publication and mention of the grant of the patent: **28.10.2026**
(21) Application number: 22912984.6
(22) Date of filing: 11.03.2022
(51) Int. Cl.: B06B 1/02, B29C 65/08

(54) **ULTRASONIC GENERATOR AND ULTRASONIC SYSTEM**
ULTRASCHALLGENERATOR UND ULTRASCHALLSYSTEM
GÉNÉRATEUR ET SYSTÈME ULTRASONORES

(30) Priority: 30.12.2021 CN 202111657736
(43) Date of publication of application: 06.11.2024
(73) Proprietor: SBT Ultrasonic Technology Co., Ltd, Shanghai 200240 (CN)
(72) Inventor: ZHOU, Hongjian, Shanghai 200240 (CN); HUANG, Weixin, Shanghai 200240 (CN)
(74) Representative: Grünecker Patent- und Rechtsanwälte PartG mbB
(86) International application number: PCT/CN2022/080410
(87) International publication number: WO 2023/123678

(56) References cited:
- CN-A- 102 535 064
- CN-A- 103 657 997
- CN-A- 104 105 588
- CN-A- 109 108 506
- US-A- 2 995 689
- US-A- 4 973 876
- US-A1- 2008 129 146

## Description

### Technical Field

The present invention relates to the field of ultrasonic welding technology, particularly to an ultrasonic generator and an ultrasonic system.

### Background

Ultrasonic welding is a well-established technology widely used in various applications of plastic and metal welding. In the power battery industry, a typical application of ultrasonic metal welding is the welding of multilayer battery tabs. This process typically uses a 20KHz ultrasonic system with an ultrasonic output power of 2000-5000W, capable of welding battery tabs with foil thicknesses of 6-10um and 20~80 layers within 0.1-0.3 seconds, becoming a standard manufacturing process in power battery production. In the wiring harness industry, another typical application is the welding between wiring harnesses and terminals. This process also uses a 20KHz ultrasonic system with an output power of 1000-5000W, capable of welding wiring harness terminals with wire diameters of 3mm²~45mm² (corresponding to terminal thicknesses of 0.2mm~2mm) within 0.3~2.0 seconds, becoming the standard manufacturing process in wiring harness/terminal production.

However, with the rapid development of electric vehicles and related industries, the technical requirements for power batteries and charging equipment have significantly increased. For instance, in the power battery industry, there is a pressing need to weld more layers of battery tabs and larger welding areas to achieve higher energy storage capacity. Similarly, in the wiring harness industry, there is a need to weld larger wire diameters, thicker terminals, and larger welding areas to support higher current throughput. These new technical demands translate into the need to expand the welding capabilities of corresponding ultrasonic systems, requiring higher maximum output power and more precise control of various parameters during the ultrasonic welding process.

Currently, commercially mature ultrasonic welding systems usually have a maximum output power of less than 6000W. The main bottleneck limiting the maximum power output of ultrasonic systems lies in their core component-the ultrasonic transducer. Due to the physical limitations of the piezoelectric ceramic pieces that make up the transducer, the maximum output power of a single commercial ultrasonic transducer rarely exceeds 6000W. However, the new applications mentioned above demand ultrasonic output power in the range of 8000-12000W or even higher.

US2995689A discloses an ultrasonic control circuit. It relates in general to the control of mechanically vibrating systems, and more particularly to the frequency control of an electromechanical transducing unit, 'or a plurality of such units driven from a single source of power.

US2008129146A1 discloses a megasonic apparatus, circuitry, signals and methods for cleaning and/or processing.

US4973876A discloses an ultrasonic power supply.

In summary, to address the above-mentioned problems in the existing technology, there is an urgent need for an ultrasonic power synthesis technology in this field. This technology would allow multiple ultrasonic transducers to work together on the same workpiece, thus increasing the maximum ultrasonic output power. Additionally, each individual ultrasonic transducer can control its output power by setting different output amplitudes based on its working load, achieving precise amplitude control through multiple ultrasonic transducers.

### Summary

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

In order to solve the above problems in the prior art, one aspect of the present invention provides an ultrasonic generator. The ultrasonic generator comprises a plurality of ultrasonic generator branches to drive respective ultrasonic transducers, where each branch includes a DC power supply, an ultrasonic oscillator for outputting an oscillating signal, a DC/AC converter for converting the DC voltage provided by the DC power supply into a high-frequency AC power based on the oscillating signal's resonant frequency and amplitude, and an impedance matching output network for converting the high-frequency AC power into a high-frequency high-voltage excitation signal to be output to the respective ultrasonic transducer, the plurality of ultrasonic generator branches include a main ultrasonic generator and at least one auxiliary ultrasonic generator, where the main ultrasonic oscillator of the main ultrasonic generator generates a main oscillating signal to control the DC/AC converter of the main ultrasonic generator based on feedback signal from the corresponding ultrasonic transducer, each auxiliary ultrasonic oscillator of the auxiliary ultrasonic generators uses an oscillating signal source on the basis of the main oscillating signal output by the main oscillator to generate an auxiliary oscillating signal having a resonant frequency consistent with the main oscillating signal to control the DC/AC converter of the respective auxiliary ultrasonic generator. By using the ultrasonic generator described above, it is possible to enhance the maximum ultrasonic output power by having multiple branches ultrasonic transducers acting together on the same welded workpiece under the condition that the maximum output power of a single ultrasonic transducer is limited, and at the same time, each single ultrasonic transducer can also be used for controlling the size of the output power of a single circuit by setting different output amplitudes according to the size of the workload thereof, so as to Achieve the technical effect of multi-branch ultrasonic precision control amplitude.

Preferably, in one embodiment, the above ultrasonic generator further comprises a phase shifter to phase-shift the main oscillating signal for each auxiliary ultrasonic generator and the main oscillation signal after the phase shift is provided as an oscillation signal source to the auxiliary ultrasonic oscillator of the auxiliary ultrasonic generator.

Optionally, in one embodiment, this phase shifter in the above ultrasonic generator is provided in the main ultrasonic generator.

Optionally, in one embodiment, the phase difference of the oscillating signal source of the auxiliary ultrasonic oscillator of each auxiliary ultrasonic generator with respect to the main oscillating signal is set based on the welding application requirements of the ultrasonic transducers corresponding to the plurality of ultrasonic generator branches.

Optionally, in one embodiment, the phase difference range is between 0 to 359°.

Preferably, in one embodiment, the ultrasonic oscillator in each ultrasonic generator branch includes an amplitude controller, and the amplitude controller adjusts the oscillation amplitude of the oscillation signal output by the ultrasonic oscillator based on the feedback voltage of the corresponding ultrasonic transducer captured by the impedance matching output network of the branch in which the ultrasonic oscillator is located.

Preferably, in one embodiment, the main ultrasonic oscillator of the main ultrasonic generator includes a phase-locked loop, and the phase-locked loop adjusts a resonant frequency of a main oscillation signal output by the main ultrasonic oscillator based on a phase difference between a feedback voltage and a feedback current of a corresponding ultrasonic transducer captured by an impedance matching output network of the main ultrasonic generator.

Optionally, in one embodiment, each ultrasonic oscillator in each ultrasonic generator branch comprises a signal synthesizer, the signal synthesizer in the main ultrasonic oscillator generating a main oscillating signal based on an oscillation amplitude output from an amplitude controller and a resonance frequency output from a phase-locked loop, and the signal synthesizer in the auxiliary ultrasonic oscillator generates the auxiliary oscillation signal based on the oscillation amplitude output from the amplitude controller and the resonance frequency and phase shift angle of the oscillation signal source provided by the phase shifter.

Another aspect of the present invention provides an ultrasonic system. The ultrasonic system includes an ultrasonic generator as described above, and corresponding ultrasonic transducers for each ultrasonic generator. By using the above-described ultrasonic system, it is possible to enhance the maximum ultrasonic output power by having multiple ultrasonic transducers acting together on the same welded workpiece under the condition that the maximum output power of a single ultrasonic transducer is limited, and at the same time, each single ultrasonic transducer can also be used for controlling the size of the output power of a single circuit by setting different output amplitudes according to the size of the workload thereof, so that the Multi-channel ultrasonic precision control of the amplitude of the technical effect.

### Brief Description of the Drawings

The above features and advantages of the present invention will be better understood after reading the detailed description of the embodiments of the present disclosure in conjunction with the following Figs. In the Figs, components are not necessarily drawn to scale, and components having similar related features may have the same or similar reference numerals.
Fig 1 shows a system structure diagram of a dual-path ultrasonic generator according to one embodiment of the present invention.
Fig 2 shows a system structure diagram of a multi-path ultrasonic generator according to one embodiment of the present invention.
Fig 3 shows an internal structure diagram of the main ultrasonic oscillator of a dual/multi-path ultrasonic generator according to one embodiment of the present invention.
Fig 4 shows a schematic diagram of the output signal of a phase shifter of a multi-path ultrasonic generator according to one embodiment of the present invention.
Fig 5 shows an internal structure diagram of the auxiliary ultrasonic oscillator of a dual/multi-path ultrasonic generator according to one embodiment of the present invention.

### Reference signs

- 100: dual-path ultrasonic generator;
- 200: multi-path ultrasonic generator;
- 110, 210: main ultrasonic generator;
- 120, 220: auxiliary ultrasonic generator;
- 116, 216: phase shifter;
- 111, 121, 211, 221: DC power supply;
- 112, 122, 212, 222: DC/AC converter;
- 113, 123, 213, 223: impedance matching output networks;
- 115, 125, 215, 225: ultrasonic transducer;
- 114, 214, 300: main ultrasonic oscillator;
- 124, 224, 500: auxiliary ultrasonic oscillator;
- 310, 510: amplitude controller;
- 320, 520: signal synthesizer;
- 330: phase-locked loop;
- 331: phase discriminator;
- 332: filter; and
- 333: voltage-controlled oscillator

### Detailed Description of Embodiments

The embodiments of the present invention are described in the following detailed description. Other advantages and effects of the present invention will be readily apparent to those skilled in the art from this disclosure. Although the description of the present invention will be described in conjunction with the preferred embodiments, this is not a limitation of the present invention. On the contrary, the invention is described in connection with the embodiments so as to cover other alternatives or modifications that are possible in the embodiments of the present invention. In order to provide a thorough understanding of the present invention, many specific details are included in the following description. The present invention may also be practiced without these details. In addition, some specific details are omitted in the description in order to avoid confusing or obscuring the present invention.

In the description of the present invention, it should be noted that the terms "installation", "connecting", and "connected" should be understood broadly unless explicitly stated and defined otherwise. For example, the terms "installation", "connecting", and "connected" may be either a fixed connection, a detachable connection, or an integral connection; the terms may be either a mechanical connection or an electrical connection; the terms also may be either a direct connection, an indirect connection through an intermediate medium, or an internal connection between two components. The specific meaning of the above terms in the present invention can be understood in a specific case by those skilled in the art.

In addition, "up", "down", "left", "right", "top", "bottom", "horizontal",
"vertical" used in the following description shall be understood as the orientation described in the paragraph and shown in the related Fig. The relative term is used for convenience of description only, and does not mean that the device described therein is to be manufactured or operated in the specific orientation, and therefore should not be construed as limiting the present invention.

Understandably, although the terms "first", "second", "third", etc. may be used to describe various components, regions, layers and/or portions to distinguish different components, regions, layers and/or portions, the order of these components, regions, layers and/or portions described above should not be limited by the terms. Therefore, a first component, region, layer and/or portion mentioned below may be also mentioned as a second component, region, layer and/or portion without departing from some embodiments of the present invention.

As described above, the existing mature ultrasonic welding systems in the market generally have a maximum output power of less than 6000W. The main bottleneck limiting the maximum power output of ultrasonic systems lies in their core component- the ultrasonic transducer. Due to the physical performance limitations of the piezoelectric ceramic pieces of the transducer's core parts, it is very difficult for a single commercial ultrasonic transducer to exceed a maximum output power of 6000W. However, the demand for ultrasonic output power in new applications has expanded to 8000-12000W or even higher.

To address the above-mentioned problems in the existing technology, there is an urgent need for an ultrasonic power synthesis technology in this field. This technology would allow multiple ultrasonic transducers to work together on the same workpiece, thus increasing the maximum ultrasonic output power. Additionally, each individual ultrasonic transducer can control its output power by setting different output amplitudes based on its working load, achieving precise amplitude control through multiple ultrasonic transducers.

The following applies the ultrasonic generator protected by the first aspect of the present invention to the ultrasonic system protected by another aspect of the present invention, and specifically describes the ultrasonic generator protected by the present invention and the ultrasonic system comprising the ultrasonic generator.

The ultrasonic generator provided by the present invention comprises multiple ultrasonic generator branches. These multiple ultrasonic generator branches may include a dual-path ultrasonic generator with two ultrasonic paths or a multi-path phased synchronous ultrasonic generator with more than two ultrasonic paths.

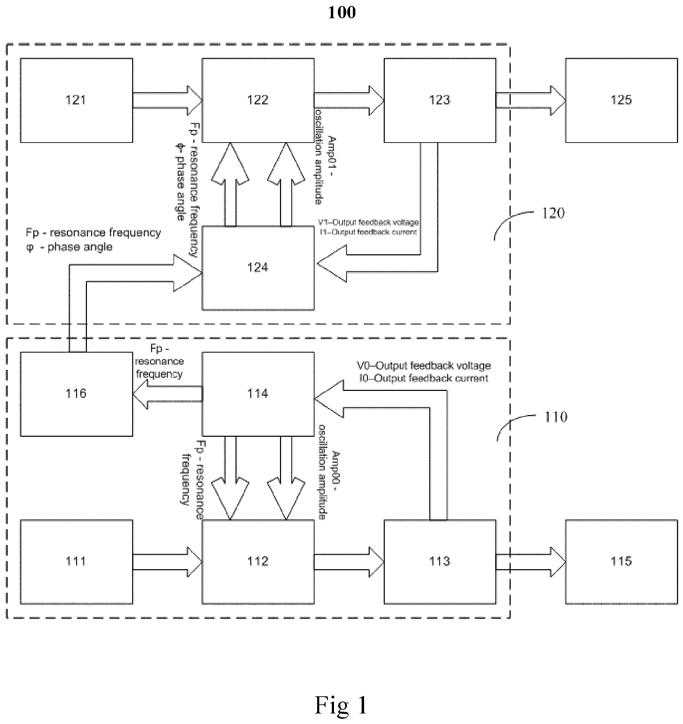

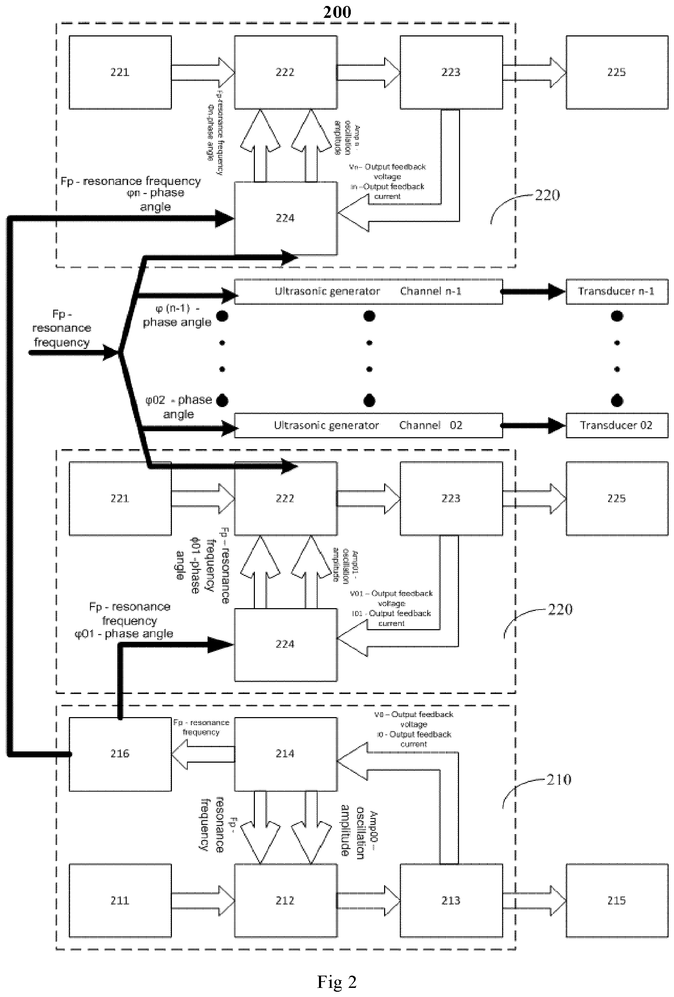

Referring specifically to FIGS. 1 and 2, Fig 1 shows a system structure diagram of a dual-path ultrasonic generator according to one embodiment of the present invention. Fig 2 shows a system structure diagram of a multi-path ultrasonic generator according to one embodiment of the present invention.

As shown in FIGS. 1 and 2, both the dual-path ultrasonic generator 100 and the multi-path ultrasonic generator 200 include a main ultrasonic generator 110, 210, and at least one auxiliary ultrasonic generator 120, 220. Specifically, the dual-path ultrasonic generator 100 in the embodiment shown in Fig 1 includes a main ultrasonic generator 110 and an auxiliary ultrasonic generator 120. The multi-path ultrasonic generator 200 in the embodiment shown in Fig 2 includes a main ultrasonic generator 210 and multiple auxiliary ultrasonic generators 220. As shown in the Figs. 1 and 2, the main ultrasonic generator 110, 210, and at least one auxiliary ultrasonic generator 120, 220 are communication-connected via phase shifters 116, 216.

Since the multi-path ultrasonic generator 200 includes the dual-path ultrasonic generator 100, and their structures and working principles are similar, except for the number of internal auxiliary ultrasonic generators 120, 220, the following description uses the dual-path ultrasonic generator 100 with two ultrasonic paths as an example to specifically introduce the ultrasonic generator protected by the invention.

As shown in Fig 1, in some embodiments of the present invention, the dual-path ultrasonic generator 100 includes a main ultrasonic generator 110 and an auxiliary ultrasonic generator 120. The main ultrasonic generator 110 and the auxiliary ultrasonic generator 120 separately drive one ultrasonic transducer each. The main ultrasonic generator 110 drives an ultrasonic transducer 115 to ensure that the welding head configured on the ultrasonic transducer 115 can output a specific resonant frequency and oscillation amplitude to meet welding requirements. The auxiliary ultrasonic generator 120 drives an ultrasonic transducer 125 to ensure that the welding head configured on the ultrasonic transducer 125 outputs a resonant frequency
consistent with the output of the ultrasonic transducer 115, but the output oscillation amplitude can be individually adjusted to meet different welding requirements.

The ultrasonic transducers 115, 125 do not belong to the main ultrasonic generator 110 and the auxiliary ultrasonic generator 120. They are the working objects of the excitation signal outputs of the main/auxiliary ultrasonic generators 110, 120. The ultrasonic transducers 115, 125 utilize the piezoelectric effect to convert the received excitation signals into mechanical vibrations, i.e., ultrasonic waves, and ultimately apply these mechanical vibrations to the workpiece through acoustic components such as amplitude transformers and welding heads, thus completing the welding work. Due to the significant differences in the equivalent circuit parameters between different ultrasonic transducers 115, 125, it is necessary to choose different main/auxiliary ultrasonic generators 110, 120 to match them in actual applications to maximize the ultrasonic transducers 115, 125's ultrasonic source effect.

In some embodiments of the present invention, the dual-path ultrasonic generator 100's main and auxiliary ultrasonic generators 110, 120 include a DC power supply 111, 121, a DC/AC converter 112, 122, and an impedance matching output network 113, 123. However, the main ultrasonic generator 110 can also include a main ultrasonic oscillator 114 and a phase shifter 116. The auxiliary ultrasonic generator 120 can include an auxiliary ultrasonic oscillator 124.

First, the functional modules common to the main/auxiliary ultrasonic generators 110, 120 will be introduced. The DC power supply 111, 121 is used to receive the input mains AC power (e.g., 220VAC/50Hz or 380VAC/50Hz) and convert it into a DC voltage source for the DC/AC converter 112, 122 to operate. The DC/AC converter 112, 122 converts the received DC voltage source into a high-frequency AC power supply for the subsequent ultrasonic transducers 115, 125 to use. This high-frequency AC power supply includes two important parameters: resonant frequency (Fp) and oscillation amplitude (Amp). The resonant frequency determines the output frequency of the high-frequency AC power supply, and the oscillation amplitude determines the duty cycle of the high-frequency AC power supply. Typically, the larger the oscillation amplitude control signal is, the wider the output duty cycle is, and the more power is supplied.

The impedance matching output network 113, 123 receives the high-frequency AC power output by the DC/AC converter 112, 122 (usually square waves) and converts it into the high-frequency high-voltage excitation signal (usually sine waves) required by the subsequent ultrasonic transducers 115, 125. Because the equivalent impedance of the ultrasonic transducers 115, 125 exhibits capacitive characteristics, the impedance matching output network 113, 123 can be designed to exhibit inductive characteristics through appropriate circuit configuration. The combination of the inductive characteristics of the impedance matching output network 113, 123 and the capacitive characteristics of the ultrasonic transducers 115, 125 allows the output signal frequency of the impedance matching output network 113, 123 to match the inherent resonant frequency of the ultrasonic transducers 115, 125.

At the same time, the impedance matching output network 113, 123 can also sample the working voltage and working current of the high-frequency high-voltage excitation signal output to the ultrasonic transducers 115, 125. After appropriate processing, the impedance matching output network 113 of the main ultrasonic generator 110 transmits the working voltage and current of the sampled and processed high-frequency high-voltage excitation signal as feedback signals to the main oscillator 114. The impedance matching output network 123 of the auxiliary ultrasonic generator 120 transmits the working voltage of the sampled and processed high-frequency high-voltage excitation signal as a feedback signal to the auxiliary oscillator 124.

Next, the main ultrasonic oscillator 114 of the main ultrasonic generator 100 will be introduced in detail. The main oscillator 114 is the control center of the entire dual-path ultrasonic generator 100, controlling the final output of high-frequency high25 voltage ultrasonic excitation signals of both the main and auxiliary ultrasonic generators 110, 120.

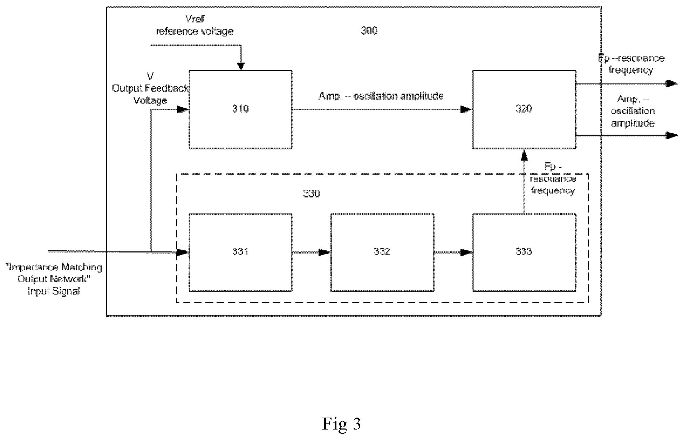

Refer to Fig 3, which shows the internal structure of the main oscillator of the dual/multi-path ultrasonic generator according to one embodiment of the present invention.

As shown in the Fig 3, in some embodiments of the present invention, the internal components of the main ultrasonic oscillator 300 include a phase-locked loop
(PLL) 330, an amplitude controller 310, and a signal synthesizer 320.

The phase-locked loop 330 inside the main ultrasonic oscillator 300 is a feedback control circuit used to continuously adjust the frequency of the output oscillating signal, ensuring that the frequency of the output oscillating signal matches the resonant frequency of the ultrasonic transducer 115 under load conditions.

The phase-locked loop 330 (PLL, Phase-Locked Loop) is a feedback control circuit characterized by using an external reference signal to control the frequency and phase of the internal oscillating signal of the loop. The phase-locked loop 330 can achieve automatic tracking of the output signal frequency to the input signal frequency, often used in closed-loop tracking circuits. When the output signal frequency equals the input signal frequency, the output voltage maintains a fixed phase difference with the input voltage, achieving the effect of "phase lock."

As shown in Fig 3, the phase-locked loop 330 typically includes a phase detector (PD) 331, a loop filter (LP) 332, and a voltage-controlled oscillator (VCO) 333.

The phase discriminator 331, also known as a phase comparator, detects the phase difference between the input signal and the output signal and converts the detected phase difference signal into a voltage signal output.

The filter 332 in the phase-locked loop 330 is typically used in the loop as a loop filter. In some embodiments of the present invention, the filter 332 may be selected as a low pass filter. A low pass filter 332 is an electronic filter that allows signals below the cutoff frequency to pass, but signals above the cutoff frequency cannot pass, i.e., passes low frequencies and blocks high frequencies. Actual control systems often have interference, including signal sampling interference, voltage or current fluctuations, etc., and these interferences are mainly manifested in the form of medium and high frequency noise (generally above 500 Hz). The low-pass filter 332 can filter out these high-frequency resonances and the noise in their vicinity, while the useful low-frequency signals can pass through with essentially no attenuation. For a practical control system, it is necessary to include the filter 332 in the control system, otherwise it may cause high frequency oscillations in the system.

The voltage-controlled oscillator 333 is an oscillation circuit in which the output frequency has a correspondence with the input control voltage. The types of voltage-
controlled oscillator 333 that can be selected are LC voltage-controlled oscillator, RC voltage-controlled oscillator, and crystal voltage-controlled oscillator. The difference lies in the components used, but they all have in common the use of a varactor diode to realize the purpose of controlling the oscillation frequency by changing the voltage.

In the above embodiment of the present invention, the working principle of the phase-locked loop 330 in the main ultrasonic oscillator 300 is as follows: the impedance matching output network 113 feedbacks the working voltage and current signals of the ultrasonic transducer 115 to the phase discriminator 331. The phase discriminator 331 compares the working voltage and current signals' waveforms and calculates the phase difference. If the ultrasonic transducer 115 is detuned, there will be a phase difference between these signals. The phase discriminator 331 converts the phase difference into a voltage signal, which is then filtered by the low-pass filter 332 to remove high-frequency components and input to the voltage-controlled oscillator 333 to be used as a control voltage for the voltage-controlled oscillator 333. This control voltage adjusts the oscillating frequency of the voltage-controlled oscillator 333 in real-time, ensuring that the sampled working voltage and current signals of the ultrasonic transducer 115 have zero phase difference, achieving that the frequency of the output signal of the voltage-controlled oscillator 333 is the same as the resonant frequency of the ultrasonic transducer 115, that is achieving that the frequency of the output signal of the main ultrasonic generator 110 is the same as the resonant frequency of the ultrasonic transducer 115.

Through the main ultrasonic oscillator 300 within the phase-locked loop 330 technology, so that the output signal frequency of the main ultrasonic oscillator 114 (300) is consistent with the actual resonance frequency of the current loaded ultrasonic transducer 115, so that the entire dual-channel ultrasonic generator 100 system work in the resonance state, at this time, the electro-acoustic conversion efficiency of the ultrasonic transducer 115 is the highest, and the Ultrasonic vibration energy for the welding is also the largest.

Referring to FIG. 3, the amplitude controller 310 within the main ultrasonic oscillation 300 is a closed-loop control module used to ensure that the amplitude of the ultrasonic vibration is always stabilized during the loaded welding process. The
amplitude controller 310 works by comparing the set external reference voltage signal and the working voltage signal output by the impedance matching output network 113 to derive a deviation signal therebetween, and then using this deviation signal as the amplitude control signal to realize timely adjustment of the amplitude of the output signal, that is, the duty cycle of the output signal. Usually, the larger the oscillation amplitude control signal is, the wider the output duty cycle is, and the more power is supplied to the output.

The signal synthesizer 320 inside the main ultrasonic oscillator 300 receives the output signals of the phase-locked loop 330 and the amplitude controller 310, combines the resonant frequency from the phase-locked loop 330 and the oscillation amplitude of the signal output from the amplitude controller 310 into a main oscillating signal.

Returning to Fig 1, the main ultrasonic oscillator 114 (300) outputs the synthesized main oscillating signal to the phase shifter 116. To drive the ultrasonic transducers 115, 125 corresponding to the main and auxiliary ultrasonic generators 110, 120, the phase shifter 116 can be configured inside the main ultrasonic generator 110 according an embodiment. In another embodiment, a plurality of phase shifters 116 may be provided, and configured inside each auxiliary ultrasonic generators 120. Alternatively, one or more phase shifter 116 may be configured outside the main ultrasonic generator 110 and the auxiliary ultrasonic generators 120.

It can be understood by those skilled in the art that the above phase shifter 116 (including the phase shifter 126 in FIG. 2) is only a module for shifting the phase of the main oscillating signals output from the dual/multiplexed main ultrasonic oscillators 114, 214, and is mainly used for clearly demonstrating the conception of the present invention and providing a specific solution for easy implementation by the public, and is not used for limiting the scope of protection of the present invention, and its configured positions and number are not limited to the several cases provided in the above embodiments of the present invention.

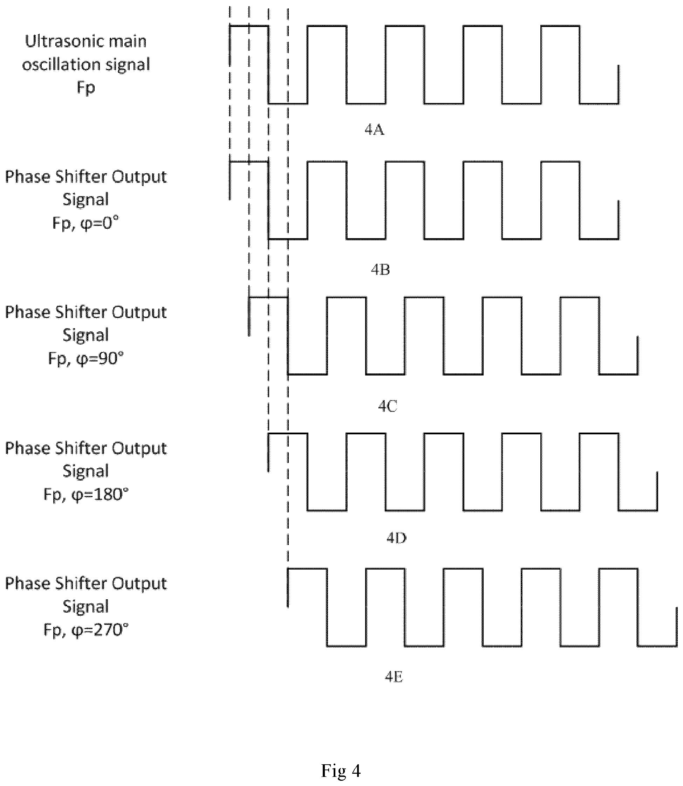

The phase shifter 116 is used to receive an oscillating signal containing resonant frequency information output from the above-described main ultrasonic oscillator 114 (300) which is identical to that for controlling the DC/AC converter 112, and to
output an oscillating signal supplied to the externally-connected dual-channel auxiliary ultrasonic generator 120 for use by means of a phase-shifting circuit in this phase shifter 116. In addition to still containing the resonant frequency information, this oscillation signal can be generated with the same resonant frequency as that of the main ultrasonic oscillator 114 (300) but with a phase difference φ according to an externally set phase difference φ. In some embodiments of the present invention, the signal output from the phase shifter 116 may be shown with reference to FIG. 4, and the phase difference between the oscillating signal output after passing through the phase shifter 116 and the main oscillating signal generated by the main ultrasonic oscillator 114 and input into the phase shifter 116 may be in a range of between 0 and 359°.

In the embodiment shown in FIG. 4, 4A shows a resonant frequency of a main oscillation signal output by the main ultrasonic oscillator 114. 4B shows an oscillation signal with a phase shift angle of 0° with respect to the main oscillation signal output by the main ultrasonic oscillator 114 after passing through the phase shifter 116, i.e., a phase difference φ between the oscillation signal output by the phase shifter 116 and the main oscillation signal output by the main ultrasonic oscillator 114 is 0°. 4C shows an oscillation signal with a phase shift angle of 90° with respect to the main oscillation signal output by the main ultrasonic oscillator 114 after passing through the phase shifter 116, i.e., the phase difference φ between the oscillation signal output by the phase shifter 116 and the main oscillation signal output by the main ultrasonic oscillator 114 is 90°. 4D shows an oscillation signal with a phase shift angle of 180° with respect to the main oscillation signal output by the main ultrasonic oscillator 114 after passing through the phase shifter 116, i.e., the phase difference φ between the oscillation signal output by the phase shifter 116 and the main oscillation signal output by the main ultrasonic oscillator 114 is 180°. 4E shows an oscillation signal with a phase shift angle of 270° with respect to the main oscillation signal output by the main ultrasonic oscillator 114 after passing through the phase shifter 116, i.e., the phase difference φ between the oscillation signal output by the phase shifter 116 and the main oscillation signal output by the main ultrasonic oscillator 114 is 270°.

The phase shifters 116, 126 in the embodiment shown in FIGS. 1 and 2 may be
set according to the actual needs of the welding application. The number and position of the ultrasonic transducers 115, 125, 215, 225 connected to the main ultrasonic generators 110, 210 and the auxiliary ultrasonic generators 120, 220 individually control the phase of the main oscillating signals inputted to each of the auxiliary ultrasonic generators 120, 220 so that the two or more torch heads connected to such ultrasonic transducers 115, 125, 215, 225 and the welded object to produce the most optimal weld.

For example, in an embodiment of an ultrasonic system structure comprising a dual-path ultrasonic generator 100, a main ultrasonic generator 110 drives an ultrasonic transducer 115 and an auxiliary ultrasonic generator 120 drives an ultrasonic transducer 125. Two welding heads connected to the ultrasonic transducers 115, 125 are located on the upper and lower sides of the object to be welded, respectively. In order to obtain a superposition of the vibrations generated by the two ultrasonic transducers 115, 125, the amplitude is doubled to achieve the effect that the power is also doubled, and at this time, the phase difference between the oscillating signal output to the auxiliary ultrasonic oscillator 124 and the main oscillating signal inputted by the main ultrasonic oscillator 114 to the phase shifter 116 may be set in the phase shifter 116 at a phase difference of 180°, so as to achieve the desirable good welding effect.

For example, in another embodiment of the ultrasonic system structure comprising the dual-channel ultrasonic generator 100, when the ultrasonic transducer 115 and the ultrasonic transducer 125 are provided on the same side of a weld head for jointly providing a source of vibration for the weld head, the other side of the weld head is in contact with the object to be welded, and in order to obtain the effect of doubling the amplitude of amplitude and doubling the power after superimposition of the vibration, it is possible to The phase difference between the oscillation signal output to the auxiliary ultrasonic oscillator 124 and the main oscillation signal input to the phase shifter 116 from the main ultrasonic oscillator 114 is set to be 0°, so as to realize a desirable welding effect.

Each of such main oscillation signals after phase shifting output by the above-described phase shifter 116 is separately input to each ultrasonic generator channel.
As in the embodiment of the dual-path ultrasonic generator 100 in Fig. 1, the above phase shifter 116 may output only one way of this main oscillating signal with phase shifted to one way of the two-way auxiliary ultrasonic generator 120 to serve as the oscillating signal to be used by the auxiliary ultrasonic oscillator 124 in that way of the auxiliary ultrasonic generator 120.

And in the embodiment of the multi-path ultrasonic generator 200 in FIG. 2, the above-described phase shifter 216 may output a multiplexed phase-shifted oscillating signal to the multiplexed auxiliary ultrasonic generator 220 to serve as an oscillating signal to be used by the auxiliary ultrasonic oscillator 224 in that multi-path auxiliary ultrasonic generator 220. Moreover, the phase difference φ between the phase-shifted oscillation signals received by each of the auxiliary ultrasonic oscillators 224 and the main oscillation signals output by that main ultrasonic oscillator 214 may be individually set and controlled.

For a detailed description of the multi-path ultrasonic generator 200 including a plurality of auxiliary ultrasonic generators 220, refer to FIG. 2. The phase shifter 216 within this main ultrasonic generator 210 may provide n-1 outputs simultaneously, each of which is provided to the auxiliary ultrasonic oscillator 224 within the n-1 auxiliary ultrasonic generators 220 for use as an oscillating signal. Each of the oscillating signals received by the n-1 auxiliary ultrasonic oscillators 224 is of the same frequency, all of which are the same resonance frequency as the oscillating signals output by the main ultrasonic oscillator 214 inside the main ultrasonic generator 210.

At the same time, between each of the oscillation signals received by the n-1 auxiliary ultrasonic oscillators 224 and the oscillation signals outputted by the main ultrasonic oscillator 214, a phase difference ranging from 0° to 359° can be set by the phase shifter 216. For example, the phase difference of the first ultrasound channel is φ1, the phase difference of the second ultrasound channel is φ2, and so on, the phase difference of the (n-1) ultrasound channels is φ(n-1), and so on, so that the (n-1) oscillating signals outputted by the phase shifter 216 are kept at a set phase difference φ.

Referring back to FIG. 1 or FIG. 2, in the dual/multi ultrasonic generator 100, 200 shown in some embodiments of the present invention, in order to be able to simultaneously drive two or more ultrasonic transducers 115, 125, 215, 225 connected to that dual/multi main ultrasonic generator 110, 210 and that at least one dual/multi auxiliary ultrasonic generator 120, 220, in addition to that two-way main ultrasonic generator 110 or such multiplexed main ultrasonic generator 210, a one-way auxiliary ultrasonic generator 120 or a multiplexed auxiliary ultrasonic generator 220 is required for a complete two-way shift-phase synchronous ultrasonic generator 100 or a multiplexed shift-phase synchronous ultrasonic generator 200. Each of the auxiliary ultrasonic generators 120, 220 may be individually responsible for driving an independent ultrasonic transducer 125, 225.

The internal structure of each of the auxiliary ultrasonic generators 120, 220 is similar to that of the main ultrasonic generators 110, 210, which has been described above and will not be repeated here. The difference with the main ultrasonic generators 110, 210 is that the auxiliary ultrasonic generators 120, 220 internally include auxiliary ultrasonic oscillators 124, 224.

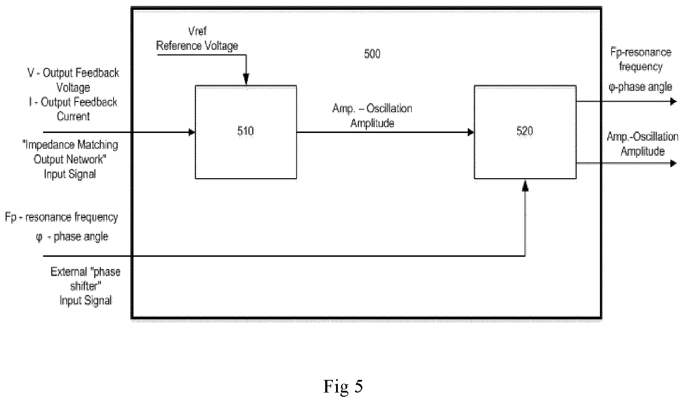

Refer to Fig 5, which shows the internal structure of the auxiliary oscillator of the dual/multi-path ultrasonic generator according to one embodiment of the present invention. The auxiliary ultrasonic oscillator 500 (124, 224) includes an amplitude controller 510 and a signal synthesizer 520.

As shown in FIG. 5, the auxiliary ultrasonic oscillator 500 is not capable of actively generating an oscillating signal internally, but instead directly accepts the main oscillating signal from the output of the main ultrasonic generator 110, 210 after phase shifting by the phase shifters 116, 216 as its own oscillating signal of the auxiliary ultrasonic oscillator 500. The auxiliary ultrasonic oscillator 500 (124, 224) still retains a complete amplitude controller 510 inside the auxiliary ultrasonic oscillator 500, which operates in the same principle as the amplitude controller 310 in the main ultrasonic oscillator 300 described above, and will not be repeated here.

A signal synthesizer 520 in the auxiliary ultrasonic oscillator 500 (124, 224) is used to receive the signals output from the amplitude controller 510 and the phase shifters 116, 126, and to synthesize an auxiliary oscillator signal for output by combining an oscillation amplitude in the output signal of the amplitude controller 510 and a resonance frequency and a phase shift angle in the output signals of the phase shifters 116, 126.

Through the above embodiment, first of all, to achieve the protection of the present invention in a kind of ultrasonic generator "synchronization" of the technical characteristics, that is, the input of the auxiliary ultrasonic oscillator 124, 224 oscillating signal frequency and the main ultrasonic oscillator 114, 214 output signal resonance frequency is the same, so that the various channels of ultrasound The resonant frequency of the output of each ultrasonic generator is exactly the same, and the entire ultrasonic system is working in a resonant state, at which time the electro acoustic conversion efficiency of the ultrasonic transducer is the highest, and the ultrasonic vibration energy used for welding is also the largest. Moreover, by simultaneously driving at least two ultrasonic transducers acting together on one or more acoustic tool head, thus realizing the function of ultrasonic power synthesis, so that the entire multi-channel ultrasonic generator is able to output 2 times or n times the maximum output power of a single transducer, so as to achieve the required output power of 8000 ~ 12000W or even higher.

In summary, the present invention provides an ultrasonic generator and an ultrasonic system, which breaks through the limitation of the maximum output power of a single transducer to the power of the entire ultrasonic system, and can well support the "extended" ultrasonic system composed of two or more transducers, and expand the maximum output power of such ultrasonic system to The maximum output power of this ultrasonic system can be expanded to double or even multiple times the maximum output power of a single transducer. At the same time, all two or more ultrasonic transducers can be operated in "shifted synchronization", which ensures that the dual or multiple ultrasonic oscillations can be effectively superimposed according to the requirements of the application to achieve optimum welding results. In addition, thanks to each auxiliary ultrasonic generator to retain a separate amplitude control module, each ultrasonic generator can control its individual drive corresponding to the ultrasonic transducer output signal output amplitude, when each individual transducer workload size is different, this control can be accurately controlled each transducer work in the required different size of the amplitude of the oscillation under the output of the different required The size of the ultrasonic power, making it possible to more accurately control the effect of welding applications.

## Claims

1. An ultrasonic generator (100; 200), wherein the ultrasonic generator (100; 200) comprises a plurality of ultrasonic generator branches to drive a plurality of corresponding ultrasonic transducers (115, 125, 215, 225), each ultrasonic generator branch includes a DC power supply (111, 121, 211, 221), an ultrasonic oscillator (114, 124, 214, 224, 300, 500) for outputting an oscillating signal, a DC/AC converter (112, 122, 212, 222) for converting a DC power provided by the DC power supply (111, 121, 211, 221) into a high-frequency AC power based on a resonant frequency and an amplitude indicated by the oscillating signal, and an impedance matching output network (113, 123, 213, 223) for converting the high-frequency AC power into a high-frequency high-voltage excitation signal to be output to the respective ultrasonic transducer (115, 125, 215, 225), the plurality of ultrasonic generator branches include a main ultrasonic generator (110, 210) and at least one auxiliary ultrasonic generator (120, 220), wherein a main ultrasonic oscillator (114, 214, 300) of the main ultrasonic generator (110, 210) generates a main oscillating signal to control the DC/AC converter (112, 122, 212, 222) of the main ultrasonic generator (110, 210) based on a feedback signal from the corresponding ultrasonic transducer (115, 125, 215, 225), an auxiliary ultrasonic oscillator (124, 224, 500) of each auxiliary ultrasonic generators (120, 220) uses an oscillating signal source on the basis of the main oscillating signal output by the main oscillator (114, 214, 300) to generate an auxiliary oscillating signal having a resonant frequency consistent with the main oscillating signal to control the DC/AC converter (122, 222) of the respective auxiliary ultrasonic generator (120, 220).

2. The ultrasonic generator of claim 1, wherein comprising a phase shifter (116, 216) to phase-shift the main oscillating signal for each auxiliary ultrasonic generator (120, 220), and the main oscillation signal after the phase shift is provided as the oscillation signal source to the auxiliary ultrasonic oscillator (124, 224, 500) of the auxiliary ultrasonic generator (120, 220).

3. The ultrasonic generator of claim 2, wherein the phase shifter (116, 216) is provided in the main ultrasonic generator (110, 210).

4. The ultrasonic generator of claim 2, wherein the phase difference of the 2 oscillating signal source of the auxiliary ultrasonic oscillator (124, 224, 500) of each auxiliary ultrasonic generator (120, 220) with respect to the main oscillating signal is set based on the welding application requirements of the ultrasonic transducers (115, 125, 215, 225) corresponding to the plurality of ultrasonic generator branches.

5. The ultrasonic generator of claim 4, wherein a range of the phase difference is between 0 to 359°.

6. The ultrasonic generator of claim 2, wherein the ultrasonic oscillator (114, 124, 214, 224, 300, 500) of each ultrasonic generator branch includes an amplitude controller (310, 510), and the amplitude controller (310, 510) adjusts the oscillation amplitude of the oscillation signal output by the ultrasonic oscillator (114, 124, 214, 224, 300, 500) based on the feedback voltage of the corresponding ultrasonic transducer (115, 125, 215, 225) captured by the impedance matching output network (113, 123, 213, 223) of the branch in which the ultrasonic oscillator (114, 124, 214, 224, 300, 500) is located.

7. The ultrasonic generator of claim 6, wherein the main ultrasonic oscillator (114, 214, 300) of the main ultrasonic generator (110, 210) includes a phase-locked loop (330), and the phase-locked loop (330) adjusts the resonant frequency of the main oscillation signal output by the main ultrasonic oscillator (114, 214, 300) based on a phase difference between a feedback voltage and a feedback current of the corresponding ultrasonic transducer (115, 125, 215, 225) captured by the impedance matching output network (113, 213) of the main ultrasonic generator (110, 210).

8. The ultrasonic generator of claim 7, wherein each ultrasonic oscillator (114, 124, 214, 224, 300, 500) in each ultrasonic generator branch comprises a signal synthesizer (320, 520), the signal synthesizer (320) in the main ultrasonic oscillator (114, 214, 300) generates the main oscillating signal based on the oscillation amplitude output from the amplitude controller (310) and the resonance frequency output from the phase-locked loop (330), and the signal synthesizer (520) in the auxiliary ultrasonic oscillator (124, 224, 500) generates the auxiliary oscillation signal based on the oscillation amplitude output from the amplitude controller (510) and the resonance frequency and a phase shift angle of the oscillation signal source provided by the phase shifter (116, 216).

9. An ultrasonic system, wherein the ultrasonic system comprises the ultrasonic generator (100, 200) of claims 1~8 and corresponding ultrasonic transducers (115, 125, 215, 225) for each ultrasonic generator (110, 120, 210, 220).

## Patentansprüche

1. Ein Ultraschallgenerator (100; 200),
wobei der Ultraschallgenerator (100; 200) umfasst:
eine Vielzahl an Ultraschallgeneratorzweigen, die dem Betrieb einer Vielzahl von zugehörigen Ultraschallwandlern dienen, wobei jeder Ultraschallgeneratorzweig umfasst:
eine Gleichstromversorgung (111, 121, 211, 221), einen Ultraschalloszillator (114, 124, 214, 224, 300, 500) zur Ausgabe eines Schwingungssignals,
einen Gleichstrom-Wechselstrom-Wandler (112, 122, 212, 222)
zur Umwandlung einer Gleichstromleistung in eine hochfrequente Wechselstromleistung, wobei die Gleichstromleistung von der Gleichstromversorgung (111, 121, 211, 221) geliefert wird, und wobei die Umwandlung auf einer Resonanzfrequenz und einer durch das Schwingungssignal angegebenen Amplitude basiert, und ein Impedanzanpassungs-Ausgangsnetzwerk (113, 123, 213, 223) zur Umwandlung der hochfrequenten Wechselstromleistung in ein hochfrequentes Hochspannungs-Anregungssignal, das an den jeweiligen zugehörigen Ultraschallwandler (115, 125, 215, 225) ausgegeben wird,
wobei die Mehrzahl an Ultraschallgeneratorzweigen umfasst:
einen Hauptultraschallgenerator (110, 210) und mindestens einen Hilfsultraschallgenerator (120, 220), wobei ein Hauptultraschalloszillator (114, 214, 300) des Haupt-Ultraschallgenerators (110, 210) ein Hauptschwingungssignal erzeugt, um den Gleichstrom-Wechselstrom-Wandler (112, 122, 212, 222) des Haupt-Ultraschallgenerators (110, 210) zu steuern, wobei das Steuern auf der Grundlage eines Rückkopplungssignals vom entsprechenden Ultraschallwandler (115, 125, 215, 225) erfolgt, und wobei ein Hilfs-Ultraschalloszillator (124, 224, 500) von jedem der Hilfs-Ultraschallgeneratoren (120, 220) das vom Hauptoszillator ausgegebene Hauptschwingungssignal(114, 214, 300) als eine Schwingungssignalquelle verwendet,
um ein Hilfsschwingungssignal zu erzeugen, wobei die Resonanzfrequenz des Hilfsschwingungssignals mit der des Hauptschwingungssignals übereinstimmt, um den Gleichstrom-Wechselstrom-Wandler (122, 222) des jeweiligen Hilfs-Ultraschallgenerators (120, 220) zu steuern.

2. Ultraschallgenerator nach Anspruch 1, umfassend einen Phasenschieber (116, 216), um für jeden Hilfs-Ultraschallgenerator (120, 220) ein phasenverschobenes Hauptschwingungssignal zu erzeugen, und wobei das Hauptschwingungssignal nach der Phasenverschiebung dem Hilfs-Ultraschalloszillator (124, 224, 500) des Hilfs-Ultraschallgenerators (120, 220) bereitgestellt wird.

3. Ultraschallgenerator nach Anspruch 2, wobei der Phasenschieber (116, 216) im HauptUltraschallgenerator (110, 210) vorgesehen ist.

4. Ultraschallgenerator nach Anspruch 2, wobei die Phasendifferenz zwischen der Schwingungssignalquelle des Hilfs-Ultraschalloszillators (124, 224, 500) jedes der Hilfs-Ultraschallgeneratoren (120, 220) gegenüber dem Hauptschwingungssignal auf der Grundlage der Anforderungen der Schweißanwendung der Ultraschallwandler (115, 125, 215, 225), die zur Vielzahl der Ultraschallgeneratorzweige zugehörig sind, festgelegt wird.

5. Ultraschallgenerator nach Anspruch 4, wobei der Bereich der Phasendifferenz zwischen 0 und 359° liegt.

6. Ultraschallgenerator nach Anspruch 2, wobei der Ultraschalloszillator (114, 124, 214, 224, 300, 500) jedes der Ultraschallgeneratorzweige einen Amplitudenregler (310, 510) umfasst, und der Amplitudenregler (310, 510) die Schwingungsamplitude des vom Ultraschalloszillator (114, 124, 214, 224, 300, 500) ausgegebenen Schwingungssignals auf der Grundlage der Rückkopplungsspannung des entsprechenden Ultraschallwandlers (115, 125, 215, 225) anpasst,
wobei die Schwingungsamplitude vom Impedanzanpassungs-Ausgangsnetzwerk (113, 123, 213, 223) des Ultraschallgeneratorzweiges erfasst wird, in dem sich der Ultraschalloszillator (114, 124, 214, 224, 300, 500) befindet.

7. Ultraschallgenerator nach Anspruch 6, wobei der Haupt-Ultraschalloszillator (114, 214, 300) des Haupt-Ultraschallgenerators (110, 210) einen Phasenregelkreis (330) umfasst,
und wobei der Phasenregelkreis (330) die Resonanzfrequenz des vom Haupt-Ultraschalloszillator (114, 214, 300) ausgegebenen Hauptschwingungssignals anpasst,
wobei diese Anpassung auf einer Phasendifferenz zwischen einer Rückkopplungsspannung und einem Rückkopplungsstrom des entsprechenden Ultraschallwandlers (115, 125, 215, 225) basiert,
wobei die Resonanzfrequenz vom Impedanzanpassungs-Ausgangsnetzwerk (113, 213) des Hauptultraschallgenerators (110, 210) erfasst wird.

8. Ultraschallgenerator nach Anspruch 7, wobei jeder Ultraschalloszillator (114, 124, 214, 224, 300, 500) in jedem Ultraschallgeneratorzweig einen Signalsynthesizer (320, 520) umfasst, wobei der Signalsynthesizer (320) im Hauptultraschalloszillator (114, 214, 300) das Hauptschwingungssignal erzeugt,
wobei die Erzeugung auf der vom Amplitudenregler (310) ausgegebenen Schwingungsamplitude und der vom Phasenregelkreis (330) ausgegebenen Resonanzfrequenz basiert,
und der Signalsynthesizer (520) im Hilfs-Ultraschalloszillator (124, 224, 500) das Hilfsschwingungssignal erzeugt,
wobei die Erzeugung auf der vom Amplitudenregler (510) ausgegebenen Schwingungsamplitude sowie der Resonanzfrequenz und einem Phasenverschiebungswinkel der Schwingungssignalquelle basiert,
die vom Phasenschieber (116, 216) bereitgestellt werden.

9. Ein Ultraschallsystem, wobei das Ultraschallsystem den Ultraschallgenerator (100, 200) gemäß den Ansprüchen 1 bis 8 und entsprechende Ultraschallwandler (115, 125, 215, 225) für jeden Ultraschallgenerator (110, 120, 210, 220) umfasst.

## Revendications

1. Générateur ultrasonore (100 ; 200), dans lequel le générateur ultrasonore (100 ; 200) comprend une pluralité de branches de générateur ultrasonore destinées à entrainer une pluralité de transducteurs ultrasonores (115, 125, 215, 225) correspondants, chaque branche de générateur ultrasonore comporte une alimentation électrique CC (111, 121, 211, 221), un oscillateur ultrasonore (114, 124, 214, 224, 300, 500) destiné à délivrer en sortie un signal oscillant, un convertisseur CC/CA (112, 122, 212, 222) destiné à convertir une puissance CC fournie par l'alimentation électrique CC (111, 121, 211, 221) en une puissance CA haute fréquence sur la base d'une fréquence de résonance et d'une amplitude indiquées par le signal oscillant, et un réseau de sortie d'adaptation d'impédance (113, 123, 213, 223) destiné à convertir la puissance CA haute fréquence en un signal d'excitation haute fréquence haute tension à délivrer en sortie au transducteur ultrasonore (115, 125, 215, 225) respectif, la pluralité de branches de générateur ultrasonore comporte un générateur ultrasonore principal (110, 210) et au moins un générateur ultrasonore auxiliaire (120, 220), dans lequel un oscillateur ultrasonore principal (114, 214, 300) du générateur ultrasonore principal (110, 210) génère un signal oscillant principal pour commander le convertisseur CC/CA (112, 122, 212, 222) du générateur ultrasonore principal (110, 210) sur la base d'un signal de rétroaction provenant du transducteur ultrasonore (115, 125, 215, 225) correspondant, un oscillateur ultrasonore auxiliaire (124, 224, 500) de chacun des générateurs ultrasonores auxiliaires (120, 220) utilise une source de signal oscillant sur la base du signal oscillant principal délivré en sortie par l'oscillateur principal (114, 214, 300) pour générer un signal oscillant auxiliaire présentant une fréquence de résonance cohérente avec le signal oscillant principal afin de commander le convertisseur CC/CA (122, 222) du générateur ultrasonore auxiliaire (120, 220) respectif.

2. Générateur ultrasonore selon la revendication 1, comprenant un déphaseur (116, 216) destiné à déphaser le signal oscillant principal pour chaque générateur ultrasonore auxiliaire (120, 220), et le signal oscillant principal après le déphasage est fourni en tant que source de signal oscillant à l'oscillateur ultrasonore auxiliaire (124, 224, 500) du générateur ultrasonore auxiliaire (120, 220).

3. Générateur ultrasonore selon la revendication 2, dans lequel le déphaseur (116, 216) est disposé dans le générateur ultrasonore principal (110, 210).

4. Générateur ultrasonore selon la revendication 2, dans lequel la différence de phase de la source de signal oscillant de l'oscillateur ultrasonore auxiliaire (124, 224, 500) de chaque générateur ultrasonore auxiliaire (120, 220) par rapport au signal oscillant principal est établie sur la base des exigences d'application de soudage des transducteurs ultrasonores (115, 125, 215, 225) correspondant à la pluralité de branches de générateur ultrasonore.

5. Générateur ultrasonore selon la revendication 4, dans lequel une plage de la différence de phase est comprise entre 0 et 359°.

6. Générateur ultrasonore selon la revendication 2, dans lequel l'oscillateur ultrasonore (114, 124, 214, 224, 300, 500) de chaque branche de générateur ultrasonore comporte un dispositif de commande d'amplitude (310, 510), et le dispositif de commande d'amplitude (310, 510) règle l'amplitude d'oscillation du signal oscillant délivré en sortie par l'oscillateur ultrasonore (114, 124, 214, 224, 300, 500) sur la base de la tension de rétroaction du transducteur ultrasonore correspondant (115, 125, 215, 225) capturée par le réseau de sortie d'adaptation d'impédance (113, 123, 213, 223) de la branche dans laquelle est situé l'oscillateur ultrasonore (114, 124, 214, 224, 300, 500).

7. Générateur ultrasonore selon la revendication 6, dans lequel l'oscillateur ultrasonore principal (114, 214, 300) du générateur ultrasonore principal (110, 210) comporte une boucle à verrouillage de phase (330), et la boucle à verrouillage de phase (330) règle la fréquence de résonance du signal oscillant principal délivré en sortie par l'oscillateur ultrasonore principal (114, 214, 300) sur la base d'une différence de phase entre une tension de rétroaction et un courant de rétroaction du transducteur ultrasonore correspondant (115, 125, 215, 225) capturée par le réseau de sortie d'adaptation d'impédance (113, 213) du générateur ultrasonore principal (110, 210).

8. Générateur ultrasonore selon la revendication 7, dans lequel chaque oscillateur ultrasonore (114, 124, 214, 224, 300, 500) dans chaque branche de générateur ultrasonore comprend un synthétiseur de signal (320, 520), le synthétiseur de signal (320) dans l'oscillateur ultrasonore principal (114, 214, 300) génère le signal oscillant principal sur la base de l'amplitude d'oscillation délivrée en sortie par le dispositif de commande d'amplitude (310) et de la fréquence de résonance délivrée en sortie par la boucle à verrouillage de phase (330), et le synthétiseur de signal (520) dans l'oscillateur ultrasonore auxiliaire (124, 224, 500) génère le signal oscillant auxiliaire sur la base de l'amplitude d'oscillation délivrée en sortie par le dispositif de commande d'amplitude (510) et de la fréquence de résonance et d'un angle de déphasage de la source de signal oscillant fournie par le déphaseur (116, 216).

9. Système ultrasonore, dans lequel le système ultrasonore comprend le générateur ultrasonore (100, 200) selon les revendications 1 à 8 et des transducteurs ultrasonores (115, 125, 215, 225) correspondants pour chaque générateur ultrasonore (110, 120, 210, 220).
